# FASCICULE DE BREVET EUROPEEN

(11) **EP 3 259 240 B1**
(45) Date de publication et mention de la délivrance du brevet: **24.07.2019**
(21) Numéro de dépôt: 16705193.7
(22) Date de dépôt: 19.02.2016
(51) Int. Cl.: C04B 35/484

(54) **PRODUIT FONDU À FORTE TENEUR EN ZIRCONE**
GESCHMOLZENES PRODUKT AUF BASIS ZIRCONIA
HIGH ZIRCONIA FUSED PRODUCT

(30) Priorité: 20.02.2015 FR 1551485
(43) Date de publication de la demande: 27.12.2017
(73) Titulaire: Saint-Gobain Centre de Recherches et d'Etudes Européen, 92400 Courbevoie (FR)
(72) Inventeur: CABODI, Isabelle, 84300 Cavaillon (FR); GAUBIL, Michel Marc, 30133 Les Angles (FR); MORAND, Christel, 13750 Plan d'Orgon (FR)
(74) Mandataire: Nony
(86) Numéro de dépôt international: PCT/EP2016/053528
(87) Numéro de publication internationale: WO 2016/131948

(56) Documents cités:
- WO-A1-03/074445
- US-A1- 2012 295 785
- US-A1- 2014 196 504
- DATABASE WPI Week 200827 Thomson Scientific, London, GB; AN 2008-D74440 XP002749022, -& JP 2008 007358 A (SAINT-GOBAIN TM KK) 17 janvier 2008 (2008-01-17)

## Description

### Domaine technique

L'invention concerne un nouveau produit réfractaire fondu et coulé à forte teneur en zircone.

### Etat de la technique

Parmi les produits réfractaires, on distingue les produits fondus et coulés, bien connus pour la construction des fours de fusion du verre, et les produits frittés.

A la différence des produits frittés, les produits fondus et coulés comportent le plus souvent une phase vitreuse intergranulaire reliant des grains cristallisés. Les problèmes posés par les produits frittés et par les produits fondus et coulés, et les solutions techniques adoptées pour les résoudre, sont donc généralement différents. Une composition mise au point pour fabriquer un produit fritté n'est donc pas a *priori* utilisable telle quelle pour fabriquer un produit fondu et coulé, et réciproquement.

Les produits fondus et coulés, souvent appelés électrofondus, sont obtenus par fusion d'un mélange de matières premières appropriées dans un four à arc électrique ou par toute autre technique adaptée à ces produits. La matière en fusion est ensuite coulée dans un moule puis le produit obtenu subit un cycle de refroidissement contrôlé pour être amené à température ambiante sans fracturation. Cette opération est appelée « recuisson » par l'homme de l'art.

Parmi les produits fondus et coulés, les produits électrofondus à forte teneur en zircone sont réputés pour leur qualité de très grande résistance à la corrosion sans coloration du verre produit et sans génération de défauts.

WO03/074445 divulgue un produit réfractaire comportant plus de 85% de zircone (ZrO2), caractérisé en ce qu'il comporte, en pourcentage en poids sur la base des oxydes: ZrO2 > 92%, SiO2: 2 à 8%, Na2O: 0,12 à 1%, Al2O3: 0,2 à 2%; Y2O3 + CaO entre 0,5 % et 2,6 %, pourvu que Y2O3 varie entre 0,3 et 2%, ou que CaO varie entre 0,5 et 1,93%. Pour la construction des fours de fusion du verre, la société Saint-Gobain TM K.K a développé et commercialise un produit appelé SCIMOS CZ dont la composition chimique comprend environ 94% de zircone, 4 à 5% de silice, environ 0,6% d'alumine et 0,4% d'oxyde de bore. L'absence d'oxydes alcalins conduit cependant à la formation de zircon à haute température (1200-1600°C) à partir de la zircone et de la silice présentes dans le produit.

Or la formation de zircon est néfaste puisqu'elle s'accompagne d'une diminution de volume de l'ordre de 20%, créant ainsi des contraintes mécaniques à l'origine de fissures, notamment lors des changements de température liés à la mise en veille du four ou à un changement de la composition (et donc de la température de fusion) du verre. Ces changements constituent des cycles thermiques avec une température passant alternativement d'une valeur inférieure à 1000-1150°C à une valeur supérieure à cette gamme.

Pour limiter la formation de zircon, les produits fondus et coulés à forte teneur en zircone comportent classiquement des oxydes alcalins, en particulier l'oxyde de sodium (Na₂O). Par exemple le produit ER-1195 fabriqué et commercialisé par la société Saint-Gobain SEFPRO et couvert par le brevet EP-B-403 387 est aujourd'hui largement utilisé dans les fours de fusion du verre. Sa composition chimique comprend environ 94% de zircone, 4% à 5% de silice, environ 1% d'alumine et 0,3% d'oxyde de sodium. Elle est typique des produits à forte teneur en zircone utilisés pour les fours verriers.

Il est cependant apparu que l'oxyde de sodium présent initialement dans un produit réfractaire utilisé au contact de verre en fusion a tendance à migrer dans ce verre, en particulier lorsque le verre est dépourvu d'alcalins. En conséquence, du zircon peut se former progressivement, ce qui réduit la durée de vie du produit, notamment en cas de cyclage thermique.

Il existe un besoin pour un produit réfractaire à forte teneur en zircone présentant, lorsqu'il est en contact avec du verre en fusion et soumis à un cyclage thermique, une durée de vie supérieure à celle des produits connus.

La présente invention vise à satisfaire ce besoin.

### Résumé de l'invention

Plus particulièrement, l'invention concerne un produit réfractaire fondu et coulé comportant, en pourcentages massiques sur la base des oxydes et pour un total de 100% des oxydes :

| | |
|---|---|
| - ZrO₂ + HfO₂ : | complément à 100%, avec HfO₂ ≤ 5% ; |
| - SiO₂: | 1,5% à 7,5% ; |
| - Al₂O₃ : | 1,0% à 3,0% ; |
| - CaO + SrO: | 1,2% à 3,0%; |
| - Y₂O₃ : | 1,5% à 3,0%; |
| - Na₂O + K₂O : | < 0,15% ; |
| - B₂O₃ : | < 1,0% ; |
| - P₂O₅ : | < 0,15% ; |
| - Fe₂O₃ + TiO₂ : | < 0,55% ; |
| - espèces autres que ZrO₂, HfO₂, SiO₂, Al₂O₃, Na₂O, K₂O, B₂O₃, CaO, SrO, Y₂O₃, P₂O₅, Fe₂O₃ et TiO₂, ou « autres espèces oxydes » : | < 1,5%. |

Comme on le verra plus loin, de manière surprenante, les inventeurs ont découvert que cette composition confère une bonne résistance au cyclage thermique. En outre, cette composition ne comporte sensiblement pas d'oxydes alcalins, ce qui évite une modification de la composition par migration de ces oxydes vers le verre en fusion, et donc limite la dégradation des propriétés du produit. Il en résulte une durée de vie supérieure.

Le produit peut en particulier présenter la forme d'un bloc d'une masse supérieure à 1 kg.

Un produit réfractaire selon l'invention peut alors encore comporter une ou plusieurs des caractéristiques optionnelles suivantes :
- La teneur massique en zircone est supérieure ou égale à 85,0%, voire supérieure ou égale à 86,0%, voire supérieure ou égale à 87,0%.
- La teneur en oxyde d'hafnium HfO₂ est inférieure ou égale à 5%, de préférence inférieure ou égale à 4%, de préférence inférieure ou égale à 3%, de préférence inférieure ou égale à 2%.
- La teneur massique de silice SiO₂ est inférieure ou égale à 7,0%, inférieure ou égale à 6,5%, voire inférieure ou égale à 6,0%, voire inférieure ou égale à 5,5%.
- La teneur massique de silice SiO₂ est supérieure ou égale à 2,0%, voire supérieure ou égale à 2,5%, voire supérieure ou égale à 3,0%.
- La teneur massique d'alumine Al₂O₃ est inférieure ou égale à 2,5%, voire inférieure ou égale à 2,3%, voire inférieure ou égale à 2,1%, voire inférieure ou égale à 2,0%.
- La teneur massique Al₂O₃ est supérieure ou égale à 1,1%, voire supérieure ou égale à 1,2%, voire supérieure ou égale à 1,3%, voire supérieure ou égale à 1,5%.
- La teneur massique d'oxyde de calcium et/ou de strontium CaO + SrO est inférieure ou égale à 2,8%, voire inférieure ou égale à 2,6%, voire inférieure ou égale à 2,5%.
- La teneur massique d'oxyde de calcium et/ou de strontium CaO + SrO est supérieure ou égale à 1,3%, voire supérieure ou égale à 1,5%, voire supérieure ou égale à 1,8%, voire supérieure ou égale à 1,9%, voire supérieure ou égale à 2,0%, voire supérieure ou égale à 2,1%.
- La teneur massique d'oxyde de calcium CaO est inférieure ou égale à 2,8%, voire inférieure ou égale à 2,6%, voire inférieure ou égale à 2,5%, voire inférieure ou égale à 2,0%.
- La teneur massique d'oxyde de calcium CaO est supérieure ou égale à 1,0%, voire supérieure ou égale à 1,3%, voire supérieure ou égale à 1,5%, voire supérieure ou égale à 1,8%.
- La teneur massique d'oxyde de strontium SrO est inférieure ou égale à 2,8%, voire inférieure ou égale à 2,6%, voire inférieure ou égale à 2,5%, voire inférieure ou égale à 2,0%.
- La teneur massique d'oxyde de strontium SrO est supérieure ou égale à 1,0%, voire supérieure ou égale à 1,3%, voire supérieure ou égale à 1,5%, voire supérieure ou égale à 1,8%.
- Le rapport de la teneur massique d'alumine et/ou d'oxyde de calcium et/ou de strontium sur la teneur en silice (Al₂O₃ + CaO + SrO)/SiO₂ est supérieur ou égal à 0,70, voire supérieur ou égal à 0,75, voire supérieur ou égal à 0,80, voire supérieur ou égal à 0,85.
- La teneur massique en oxyde d'yttrium Y₂O₃ est inférieure ou égale à 2,8%, voire inférieure à 2,5%, voire inférieure à 2,2%. voire inférieure à 2,1%.voire inférieure à 2,0%.
- La teneur massique en oxyde d'yttrium Y₂O₃ est supérieure ou égale à 1,6%, voire supérieure à 1,7%, voire supérieure à 1,8%.
- La teneur massique en oxydes alcalins Na₂O + K₂O est inférieure ou égale à 0,10%, voire inférieure ou égale à 0,05%.
- La teneur massique B₂O₃ est inférieure ou égale à 0,8%, voire inférieure ou égale à 0,7%, voire inférieure ou égale à 0,6%, voire inférieure ou égale à 0,5%.
- Le rapport de la teneur massique en silice sur la teneur en oxyde de bore SiO₂/B₂O₃ est supérieur ou égal à 8.
- B₂O₃ n'est présent qu'à titre d'impuretés.
- La teneur massique P₂O₅ est de préférence inférieure à 0,10%, de préférence encore inférieure à 0,05%.
- Les oxydes de fer et/ou de titane et/ou de baryum et/ou de magnésium et/ou de zinc et/ou de phosphore ne sont présents qu'à titre d'impuretés.
- La teneur massique en oxydes de fer et/ou de titane, Fe₂O₃ + TiO₂, est inférieure à 0,4%, de préférence inférieure à 0,3%, de préférence inférieure à 0,2%.
- La teneur massique totale des « autres espèces oxydes » est inférieure à 1,0%, inférieure à 0,6%, inférieure à 0,5%, voire inférieure à 0,3%.
- Les « autres espèces oxydes » ne sont constituées que par des impuretés.
- La teneur massique en Ta₂O₅ est inférieure ou égale à 0,1 %, de préférence inférieure ou égale à 0,05%.
- La teneur massique en Nb₂O₅ est inférieure ou égale à 0,1 %, de préférence inférieure ou égale à 0,05%.
- La teneur massique en Ta₂O₅ + Nb₂O₅ est inférieure ou égale à 0,1 %, de préférence inférieure ou égale à 0,05%.

Un procédé pour fabriquer un produit réfractaire selon l'invention comprend les étapes successives suivantes :
a) mélange de matières premières de manière à former une charge de départ,
b) fusion de ladite charge de départ jusqu'à obtention d'une matière en fusion,
c) coulage, de préférence dans un moule, et solidification de ladite matière en fusion, par refroidissement, de manière à obtenir un produit réfractaire,
ce procédé étant remarquable en ce que lesdites matières premières sont choisies de manière que ledit produit réfractaire soit conforme à l'invention.

De préférence, on ajoute systématiquement et méthodiquement les oxydes pour lesquels une teneur minimale est nécessaire (ZrO₂ + HfO₂, SiO₂, Al₂O₃, Y₂O₃, CaO + SrO) ou des précurseurs de ces oxydes. De préférence, on tient compte des teneurs de ces oxydes dans les sources des autres oxydes où ils sont classiquement considérés comme des impuretés.

De préférence, le refroidissement est contrôlé, de préférence de manière à être effectué à une vitesse inférieure à 20°C par heure, de préférence à la vitesse d'environ 10°C par heure.

Un four de fusion de verre peut comporter un produit réfractaire selon l'invention, ou un produit réfractaire qui est fabriqué selon un procédé comme décrit ci-dessus, en particulier dans une région destinée à être en contact avec du verre en fusion. Dans ce four le produit réfractaire peut avantageusement faire partie d'une cuve de préparation de verre par fusion, notamment par fusion électrique, où il est susceptible d'entrer en contact avec du verre en fusion à une température supérieure à 1200°C.

### Définitions

Les teneurs massiques en oxydes se rapportent aux teneurs globales pour chacun des éléments chimiques correspondants, exprimées sous la forme de l'oxyde le plus stable, selon la convention habituelle de l'industrie ; sont donc inclus les sous-oxydes et éventuellement nitrures, oxynitrures, carbures, oxycarbures, carbonitrures, ou même les espèces métalliques des éléments susmentionnés.

Une « matière en fusion » est une masse liquide qui, pour conserver sa forme, doit être contenue dans un récipient. Elle peut contenir quelques particules solides, mais en quantité insuffisante pour qu'elles puissent structurer ladite masse.

Par « impuretés», on entend les constituants inévitables, introduits involontairement et nécessairement avec les matières premières ou résultant de réactions avec ces constituants. Les impuretés ne sont pas des constituants nécessaires, mais seulement tolérés. Par exemple, les composés faisant partie du groupe des oxydes, nitrures, oxynitrures, carbures, oxycarbures, carbonitrures et espèces métalliques de fer, titane, vanadium et chrome sont des impuretés.

Sauf mention contraire, toutes les teneurs en oxydes dans les produits décrits et revendiqués sont des pourcentages massiques sur la base des oxydes.

Le signe « + » séparant deux oxydes signifie classiquement « et/ou ».

### Description détaillée de l'invention

Dans un produit fondu et coulé selon l'invention, la forte teneur en zircone ZrO₂ permet de répondre aux exigences de haute résistance à la corrosion sans coloration du verre produit, ni génération de défauts nuisibles à la qualité de ce verre.

Dans un produit obtenu par fusion, HfO₂ n'est pas chimiquement dissociable de ZrO₂. Dans la composition chimique d'un tel produit, ZrO₂+HfO₂ désigne la teneur totale de ces deux oxydes. Cependant, selon la présente invention, HfO₂ n'est pas ajouté volontairement dans la charge de départ. HfO₂ ne désigne donc que les traces d'oxyde d'hafnium, cet oxyde étant toujours naturellement présent dans les sources de zircone à des teneurs généralement inférieures à 2%. Par souci de clarté, on peut donc désigner indifféremment la teneur en zircone et en trace d'oxyde d'hafnium par ZrO₂+HfO₂ ou par ZrO₂, on encore par « teneur en zircone ».

La présence de silice SiO₂ est nécessaire et permet notamment la formation d'une phase vitreuse intergranulaire apte à accommoder de manière efficace les variations de volume de la zircone lors de sa transformation allotropique réversible, c'est-à-dire lors du passage de la phase monoclinique à la phase tétragonale. La teneur en silice SiO₂ doit toutefois être limitée pour préserver une très bonne résistance à la corrosion en limitant la teneur en phase vitreuse au profit de la zircone.

La présence d'alumine Al₂O₃ favorise la formation d'une phase vitreuse stable et améliore la coulabilité des produits dans le moule. Une teneur excessive entraîne une instabilité de la phase vitreuse (formation de cristaux), ce qui a un impact négatif sur la faisabilité, en particulier en présence d'oxyde de bore.

La présence d'oxyde de bore est optionnelle. Cet élément permet d'améliorer la faisabilité des produits. Dans un mode de réalisation, la teneur massique B₂O₃ est donc supérieure ou égale à 0,3%, voire supérieure ou égale à 0,4%, voire supérieure ou égale à 0,5%.

La présence d'oxyde de bore a cependant un effet un effet défavorable sur la formation de zircon dans le produit. Dans un autre mode de réalisation, une teneur massique en oxyde de bore B₂O₃ la plus faible possible est préférée.

La présence simultanée d'oxyde d'yttrium Y₂O₃ et des oxydes CaO et/ou SrO, dans des teneurs selon l'invention, permet, en combinaison avec les autres constituants, d'obtenir un produit réfractaire particulièrement bien adapté pour être utilisé en contact avec du verre en fusion. Ce produit réfractaire présente en particulier une bonne résistance à la corrosion et une résistance au cyclage thermique élevée et sensiblement constante dans le temps. Ces teneurs permettent également de préserver une bonne faisabilité.

Les oxydes alcalins Na₂O et K₂O peuvent migrer dans le verre en fusion et ne permettent pas d'assurer un effet durable. La teneur massique de Na₂O+K₂O doit donc être limitée.

Selon l'invention, Fe₂O₃, TiO₂ et P₂O₅ sont connus pour être néfastes et leur teneur doit être de préférence limitée à des traces introduites à titre d'impuretés avec les matières premières.

Les « autres espèces oxydes » sont les espèces qui ne sont pas listées ci-dessus, à savoir les espèces autres que ZrO₂, HfO₂, SiO₂, Al₂O₃, Na₂O, K₂O, B₂O₃, CaO, SrO, Y₂O₃, P₂O5, Fe₂O₃ et TiO₂. Dans un mode de réalisation, les « autres espèces oxydes » sont limitées à des espèces dont la présence n'est pas particulièrement souhaitée et qui sont généralement présentes à titre d'impuretés dans les matières premières.

La présence des « autres espèces oxydes » ne modifie pas substantiellement les résultats obtenus, pourvu que leur teneur reste inférieure à 1,5%.

Classiquement, dans un produit fondu et coulé, les oxydes représentent plus de 98,5%, plus de 99%, voire sensiblement 100% de la masse du produit. Il en est de même dans un produit selon l'invention.

Tout procédé conventionnel de fabrication de produits fondus à base de zircone destinés à des applications dans des fours de fusion de verre peut être mis en oeuvre, pourvu que la composition de la charge de départ permette d'obtenir des produits présentant une composition conforme à celle d'un produit selon l'invention.

En particulier, un produit selon l'invention peut être classiquement fabriqué suivant les étapes a) à c) décrites ci-dessus.

A l'étape a), les matières premières sont choisies de manière à garantir les teneurs en oxydes dans le produit fini. L'homme du métier sait parfaitement déterminer la composition d'une charge de départ en fonction de la composition du produit souhaité.

A l'étape b), la fusion est de préférence réalisée grâce à l'action combinée d'un arc électrique assez long, ne produisant pas de réduction, et d'un brassage favorisant la réoxydation des produits.

Pour minimiser la formation de nodules d'aspect métallique et éviter la formation de fentes ou fendillements dans le produit final, il est préférable d'opérer la fusion dans des conditions oxydantes.

Préférentiellement, on utilise le procédé de fusion à l'arc long décrit dans le brevet français n°1 208 577 et ses additions n°75893 et 82310.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain en fusion et en brassant ledit bain, soit par l'action de l'arc lui-même, soit en faisant barboter un gaz oxydant (air ou oxygène, par exemple) dans le bain, ou encore en ajoutant au bain des substances dégageant de l'oxygène telles que des peroxydes ou des nitrates.

La fusion peut en particulier s'opérer à une température supérieure à 2300°C, de préférence comprise entre 2400°C et 2500°C.

Un produit de l'invention ainsi fabriqué est constitué de grains de zircone entourés par une phase vitreuse.

La zircone peut être monoclinique pour plus de 80%, plus de 85%, plus de 90%, plus de 99% ou sensiblement 100%, en pourcentage massique.

La phase vitreuse peut comporter plus de 50%, voire plus de 70%, de silice, entre 5% et 20% de B₂O₃ et entre 1% et 20% d'alumine, en pourcentages massiques sur la base de la phase vitreuse. La silice, B₂O₃ et l'alumine peuvent représenter plus de 95%, plus de 97%, voire sensiblement 100% de la masse de la phase vitreuse.

### Exemples

Les exemples non limitatifs suivants sont donnés dans le but d'illustrer l'invention.

Dans ces exemples, on a employé les matières premières suivantes :
- de la zircone contenant principalement, en moyenne massique, 98,5% de ZrO₂ + HfO₂, 0,2% de SiO₂ et 0,02% de Na₂O,
- du sable de zircon à 33% de silice SiO₂,
- de l'alumine de type AC44 vendue par da société Pechiney et contenant en moyenne 99,4% d'alumine Al₂O₃,
- de l'oxyde de bore de pureté supérieure à 99%,
- de l'oxyde d'yttrium de pureté supérieure à 99%,
- du carbonate de calcium contenant environ 56% de CaO,
- du carbonate de strontium contenant environ 70% de SrO

Les matières premières ont été fondues à une température comprise entre 2000 et 2500°C, selon le procédé classique de fusion en four à arc de type Héroult, en conditions oxydantes, puis la matière en fusion a été coulée dans des moules pour obtenir des blocs de format 220 mm x 450 mm x 150 mm.

Les exemples de référence sont les produits ER-1195 et SCIMOS CZ, mentionnés ci-dessus.

Pour tous les produits obtenus, l'analyse cristallographique révèle des cristaux de zircone entourés d'une phase vitreuse comportant typiquement plus de 70% de silice.

L'analyse chimique des produits obtenus est donnée dans le tableau 1. Il s'agit d'une analyse chimique globale moyenne, donnée en pourcentages massiques sur la base des oxydes. Le taux d'impureté est d'environ 0,3% en pourcentages massiques sur la base des oxydes ; le complément à 100% correspond à la teneur en zircone.

La résistance au cyclage thermique est déterminée à l'aide d'un test consistant à faire subir à un échantillon (de dimensions 30 mm x 30 mm x 30 mm) vingt cycles entre 800°C et 1250°C (Test A) et entre 500°C et 1250°C (Test B). A chaque cycle, l'échantillon est maintenu 1 heure respectivement à 800°C ou à 500°C, puis la température est portée à 1250°C en 1 heure et est maintenue à cette valeur pendant 1 heure.

La valeur Vv indiquée dans le tableau 1 correspond à l'augmentation de volume, donnée en pourcentage, entre le début et la fin de l'essai. Dans ce tableau, « ND » signifie « Non Déterminé ».

La zircone et les impuretés constituent le complément à 100%, la teneur en impuretés étant d'environ 0,3%.

**Tableau 1**

| Exemple | SiO₂ | Al₂O₃ | B₂O₃ | Na₂O +K₂O | Y₂O₃ | CaO+ SrO | Test A (Vv) | Test B (Vv) | Na₂O | K₂O | CaO | SrO |
|---|---|---|---|---|---|---|---|---|---|---|---|---|
| **ER1195** | 4,0 | 1,2 | 0,0 | 0,30 | 0,2 | 0,0 | 6 | 20 | 0,30 | 0,00 | 0,0 | 0,0 |
| **CZ** | 4,5 | 0,7 | 0,4 | 0,02 | 0,2 | 0,0 | 29 | 32 | 0,02 | 0,00 | 0,0 | 0,0 |
| **1** | 5,3 | 2,1 | 0,5 | 0,00 | 0,1 | 0,4 | 17 | ND | 0,00 | 0,00 | 0,4 | 0,0 |
| **2** | 4,4 | 1,2 | 0,5 | 0,00 | 0,1 | 2,5 | 48 | ND | 0,00 | 0,00 | 0,0 | 2,5 |
| **3** | 4,9 | 2,1 | 0,3 | 0,05 | 0,2 | 2,5 | 46 | ND | 0,05 | 0,00 | 2,5 | 0,0 |
| **4** | 5,2 | 2,1 | 0,3 | 0,02 | 0,0 | 2,1 | 36 | ND | 0,00 | 0,02 | 0,0 | 2,1 |
| **5** | 4,9 | 1,8 | 0,6 | 0,05 | 1,3 | 2,3 | 100 | ND | 0,05 | 0,00 | 2,3 | 0,0 |
| **6** | 5,2 | 2,0 | 0,4 | 0,05 | 1,4 | 2,2 | 48 | ND | 0,05 | 0,00 | 2,2 | 0,0 |
| 7 | 5,1 | 2,4 | 0,3 | 0,00 | 1,5 | 2,1 | ≤ 6 | ND | 0,00 | 0,00 | 0,0 | 2,1 |
| 8 | 5,0 | 2,2 | 0,3 | 0,00 | 1,6 | 2,0 | ≤ 6 | ND | 0,00 | 0,00 | 0,0 | 2,0 |
| 9 | 5,1 | 2,0 | 0,5 | 0,00 | 2,1 | 2,4 | ≤ 6 | ND | 0,00 | 0,00 | 2,4 | 0,0 |
| 10 | 5,1 | 2,2 | 0,2 | 0,01 | 2,1 | 1,9 | ≤ 6 | ≤ 9 | 0,00 | 0,01 | 0,0 | 1,9 |
| 11 | 4,3 | 2,1 | 0,1 | 0,00 | 2,1 | 2,3 | ≤ 6 | ≤ 9 | 0,00 | 0,00 | 2,1 | 0,2 |
| 12 | 4,9 | 2,1 | 0,2 | 0,12 | 2,2 | 2,2 | ≤ 6 | ≤ 9 | 0,07 | 0,05 | 2,1 | 0,1 |
| 13 | 5,2 | 2,2 | 0,2 | 0,10 | 2,2 | 1,9 | ≤ 6 | ≤ 9 | 0,07 | 0,03 | 0,0 | 1,9 |
| 14 | 2,8 | 2,5 | 0,1 | 0,00 | 2,2 | 2,6 | ≤ 6 | ≤ 9 | 0,00 | 0,00 | 2,3 | 0,3 |
| 15 | 4,6 | 2,1 | 0,1 | 0,01 | 2,2 | 2,2 | ≤ 6 | ≤ 9 | 0,00 | 0,01 | 2,0 | 0,2 |
| 16 | 5,1 | 2,0 | 0,6 | 0,05 | 2,3 | 2,3 | ≤ 6 | ≤ 9 | 0,05 | 0,00 | 2,3 | 0,0 |
| 17 | 5,1 | 2,3 | 0,5 | 0,00 | 2,5 | 2,3 | ≤ 6 | ≤ 9 | 0,00 | 0,00 | 1,3 | 1,0 |
| 18 | 5,2 | 2,3 | 0,5 | 0,00 | 2,6 | 2,3 | ≤ 6 | ND | 0,00 | 0,00 | 1,6 | 0,8 |
| 19 | 5,1 | 2,2 | 0,1 | 0,06 | 2,6 | 2,3 | ≤ 6 | ≤ 9 | 0,05 | 0,01 | 1,7 | 0,6 |
| 20 | 5,3 | 2,2 | 0,1 | 0,13 | 2,6 | 2,4 | ≤ 6 | ≤ 9 | 0,09 | 0,04 | 1,9 | 0,5 |
| 21 | 2,8 | 1,4 | 0,1 | 0,06 | 2,2 | 1,4 | ND | ≤ 9 | 0,05 | 0,01 | 1,4 | 0,0 |
| 22 | 3,2 | 1,7 | 0,2 | 0,00 | 2,0 | 1,4 | ND | ≤ 9 | 0,00 | 0,00 | 0,7 | 0,7 |
| 23 | 3,6 | 1,6 | 0,1 | 0,07 | 2,4 | 1,2 | ND | ≤ 9 | 0,06 | 0,01 | 0,3 | 0,9 |
| 24 | 5,2 | 2,1 | 0,1 | 0,06 | 2,7 | 2,2 | ND | ≤ 9 | 0,06 | 0,00 | 1,8 | 0,4 |
| 25 | 5,5 | 2,6 | 0,1 | 0,11 | 2,2 | 1,6 | ND | ≤ 9 | 0,09 | 0,02 | 1,6 | 0,0 |
| 26 | 4,2 | 2,0 | 0,8 | 0,02 | 1,9 | 2,8 | ND | 11 | 0,00 | 0,02 | 2,5 | 0,3 |
| 27 | 3,6 | 1,1 | 0,7 | 0,00 | 2,1 | 1,7 | ND | 16 | 0,00 | 0,00 | 0,9 | 0,8 |
| 28 | 1,5 | 1,0 | 0,0 | 0,06 | 1,6 | 1,6 | ND | ≤ 9 | 0,05 | 0,01 | 1,5 | 0,1 |
| 29 | 2,6 | 1,3 | 0,1 | 0,06 | 2,0 | 1,5 | ND | ≤ 9 | 0,05 | 0,01 | 1,5 | 0,0 |

Une comparaison des exemples 4 et 6 montre qu'en présence d'une teneur en oxydes alcalins inférieure à 0,15%, une augmentation de la teneur en Y₂O₃ peut être préjudiciable, le résultat au test A passant de 36 à 48 lorsque la teneur en Y₂O₃ passe de 0 à 1,4%. C'est le mérite des inventeurs d'avoir découvert qu'un effet positif était possible au-delà d'une teneur de 1,5%, pourvu notamment que la teneur CaO+ SrO soit comprise entre 1,2% et 3,0%, comme l'illustre en particulier une comparaison des exemples 6 et 8.

Les résultats montrent que les produits de l'invention testés présentent une très bonne résistance au cyclage thermique malgré la faible teneur, voire l'absence de Na₂O et K₂O.

Les exemples 26 et 27 montrent que la résistance au cyclage thermique est particulièrement améliorée lorsque le rapport de la teneur massique en silice sur la teneur en oxyde de bore SiO₂/B₂O₃ est supérieur ou égal à 8, en particulier lorsque la teneur en silice est inférieure à 4,5%.

Sans vouloir lier l'invention à une quelconque théorie, les inventeurs pensent que la composition des produits de l'invention permet de limiter la formation de zircon. Ainsi, il ne forme pas, autour des cristaux de zircone, de phase cristalline présentant un comportement dilatométrique différent de celui de la zircone, en particulier autour de 1000-1150°C. La phase vitreuse peut alors accommoder les déformations volumiques liées au cyclage thermique.

Bien entendu, la présente invention n'est pas limitée aux modes de réalisation décrits et représentés fournis à titre d'exemples illustratifs et non limitatifs.

## Revendications

1. Produit réfractaire fondu et coulé comportant, en pourcentages massiques sur la base des oxydes et pour un total de 100% des oxydes :
| | |
|---|---|
| - ZrO₂ + HfO₂ : | complément à 100%, avec HfO₂ ≤ 5% ; |
| - SiO₂: | 1,5% à 7,5% ; |
| - Al₂O₃ : | 1,0% à 3,0% ; |
| - CaO + SrO: | 1,2% à 3,0%; |
| - Y₂O₃ : | 1,5% à 3,0%; |
| - Na₂O + K₂O : | < 0,15% ; |
| - B₂O₃ : | < 1,0% ; |
| - P₂O₅ : | < 0,15% ; |
| - Fe₂O₃ + TiO₂ : | < 0,55% ; |
| - espèces oxydes autres que ZrO₂, HfO₂, SiO₂, Al₂O₃, Na₂O, K₂O, B₂O₃, CaO, SrO, Y₂O₃, P₂O₅, Fe₂O₃ et TiO₂: | < 1,5%. |

2. Produit selon la revendication précédente, dans lequel la teneur massique Y₂O₃ est inférieure ou égale à 2,5%.

3. Produit selon la revendication précédente, dans lequel la teneur massique Y₂O₃ est supérieure ou égale à 1,7%.

4. Produit selon la revendication précédente, dans lequel la teneur massique CaO + SrO est inférieure ou égale à 2,5%.

5. Produit selon l'une quelconque des revendications précédentes, dans lequel la teneur massique CaO + SrO est supérieure ou égale à 1,3%.

6. Produit selon la revendication précédente, dans lequel la teneur massique CaO + SrO est supérieure ou égale à 1,8%.

7. Produit selon l'une quelconque des revendications précédentes, dans lequel la teneur massique de silice SiO₂ est supérieure ou égale à 2,5%.

8. Produit selon l'une quelconque des revendications précédentes, dans lequel la teneur massique de silice SiO₂ est inférieure ou égale à 7,0%.

9. Produit selon la revendication 8, dans lequel la teneur massique de silice SiO₂ est inférieure ou égale à 6,0%.

10. Produit selon l'une quelconque des revendications précédentes, dans lequel la teneur massique Al₂O₃ est inférieure ou égale à 2,5%.

11. Produit selon la revendication 10, dans lequel la teneur massique Al₂O₃ est inférieure ou égale à 2,3%.

12. Produit selon l'une quelconque des revendications précédentes, dans lequel la teneur massique Al₂O₃ est supérieure ou égale à 1,5%.

13. Produit selon l'une quelconque des revendications précédentes, dans lequel la teneur massique en B₂O₃ est inférieure ou égale à 0,5%.

14. Produit selon l'une quelconque des revendications précédentes, dans lequel
- la teneur massique Na₂O + K₂O est inférieure ou égale à 0,10%, et
- la teneur massique en oxydes de fer et/ou de titane, Fe₂O₃ + TiO₂, est inférieure à 0,4%, et
- la teneur massique en P₂O₅ est inférieure ou égale à 0,05%, et
- la teneur massique totale des espèces oxydes autres que ZrO₂, HfO₂, SiO₂, Al₂O₃, Na₂O, K₂O, B₂O₃, CaO, SrO, Y₂O₃, P₂O₅, Fe₂O₃ et TiO₂ est inférieure à 1,0%.

15. Produit selon l'une quelconque des revendications précédentes, dans lequel le rapport de la teneur massique en silice sur la teneur en oxyde de bore SiO₂/B₂O₃ est supérieur ou égal à 8.

## Patentansprüche

1. Schmelzgegossenes feuerfestes Produkt, umfassend in Massenprozent auf der Basis der Oxide und für insgesamt 100 % der Oxide:
| | |
|---|---|
| - ZrO₂ + HfO₂: | Rest auf 100 %, mit HfO₂ ≤ 5 %; |
| - SiO₂: | 1,5 % bis 7,5 %; |
| - Al₂O₃: | 1,0 % bis 3,0 %; |
| - CaO + SrO: | 1,2 % bis 3,0 %; |
| - Y₂O₃: | 1,5 % bis 3,0 %; |
| - Na₂O + K₂O: | < 0,15 %; |
| - B₂O₃: | < 1,0 %; |
| - P₂O₅: | < 0,15 %; |
| - Fe₂O₃ + HO₂: | < 0,55 %; |
| - Oxidspezies, die von ZrO₂, HfO₂, SiO₂, Al₂O₃, Na₂O, K₂O, B₂O₃, CaO, SrO, Y₂O₃, P₂O5, Fe₂O₃ und TiO₂ verschieden sind: | < 1,5 %. |

2. Produkt nach dem vorhergehenden Anspruch, wobei der Massengehalt von Y₂O₃ kleiner oder gleich 2,5 % ist.

3. Produkt nach dem vorhergehenden Anspruch, wobei der Massengehalt von Y₂O₃ größer oder gleich 1,7 % ist.

4. Produkt nach dem vorhergehenden Anspruch, wobei der Massengehalt von CaO + SrO kleiner oder gleich 2,5 % ist.

5. Produkt nach dem vorhergehenden Anspruch, wobei der Massengehalt von CaO + SrO größer oder gleich 1,3 % ist.

6. Produkt nach dem vorhergehenden Anspruch, wobei der Massengehalt von CaO + SrO größer oder gleich 1,8 % ist.

7. Produkt nach einem der vorhergehenden Ansprüche, wobei der Massengehalt von Siliciumdioxid SiO₂ größer oder gleich 2,5 % ist.

8. Produkt nach einem der vorhergehenden Ansprüche, wobei der Massengehalt von Siliciumdioxid SiO₂ kleiner oder gleich 7,0 % ist.

9. Produkt nach Anspruch 8, wobei der Massengehalt von Siliciumdioxid SiO₂ kleiner oder gleich 6,0 % ist.

10. Produkt nach einem der vorhergehenden Ansprüche, wobei der Massengehalt von Al₂O₃ kleiner oder gleich 2,5 % ist.

11. Produkt nach Anspruch 10, wobei der Massengehalt von Al₂O₃ kleiner oder gleich 2,3 % ist.

12. Produkt nach einem der vorhergehenden Ansprüche, wobei der Massengehalt von Al₂O₃ größer oder gleich 1,5 % ist.

13. Produkt nach einem der vorhergehenden Ansprüche, wobei der Massengehalt von B₂O₃ kleiner oder gleich 0,5 % ist.

14. Produkt nach einem der vorhergehenden Ansprüche, wobei
- der Massengehalt von Na₂O + K₂O kleiner oder gleich 0,10 % ist und
- der Massengehalt von Eisenoxid und/oder Titanoxid, Fe₂O₃ + TiO₂, kleiner als 0,4 % ist und
- der Massengehalt von P₂O₅ kleiner oder gleich 0,05 % ist und
- der gesamte Massengehalt der Oxidspezies, die von ZrO₂, HfO₂, SiO₂, Al₂O₃, Na₂O, K₂O, B₂O₃, CaO, SrO, Y₂O₃, P₂O5, Fe₂O₃ und Ti02 verschieden sind, weniger als 1,0 % beträgt.

15. Produkt nach einem der vorhergehenden Ansprüche, wobei das Verhältnis des Massengehalts von Siliciumoxid zum Massengehalt von Boroxid SiO₂ : B₂O₃ größer oder gleich 8 ist.

## Claims

1. Fused-cast refractory product comprising, as mass percentages on the basis of the oxides and for a total of 100% of the oxides:
| | |
|---|---|
| - ZrO₂ + HfO₂: | remainder to 100%, with HfO₂ ≤ 5%; |
| - SiO₂: | 1.5% to 7.5%; |
| - Al₂O₃: | 1.0% to 3.0%; |
| - CaO + SrO: | 1.2% to 3.0%; |
| - Y₂O₃: | 1.5% to 3.0%; |
| - Na₂O + K₂O: | < 0.15%; |
| - B₂O₃: | < 1.0%; |
| - P₂O₅: | < 0.15%; |
| - Fe₂O₃ + TiO₂: | < 0.55%; |
| - oxide species other than ZrO₂, HfO₂, SiO₂, Al₂O₃, Na₂O, K₂O, B₂O₃, CaO, SrO, Y₂O₃, P₂O5, Fe₂O₃ and TiO₂: | < 1.5%. |

2. Product according to the preceding claim, in which the mass content of Y₂O₃ is less than or equal to 2.5%.

3. Product according to the preceding claim, in which the mass content of Y₂O₃ is greater than or equal to 1.7%.

4. Product according to the preceding claim, in which the mass content of CaO + SrO is less than or equal to 2.5%.

5. Product according to any one of the preceding claims, in which the mass content of CaO + SrO is greater than or equal to 1.3%.

6. Product according to the preceding claim, in which the mass content of CaO + SrO is greater than or equal to 1.8%.

7. Product according to any one of the preceding claims, in which the mass content of silica SiO₂ is greater than or equal to 2.5%.

8. Product according to any one of the preceding claims, in which the mass content of silica SiO₂ is less than or equal to 7.0%.

9. Product according to claim 8, in which the mass content of silica SiO₂ is less than or equal to 6.0%.

10. Product according to any one of the preceding claims, in which the mass content of Al₂O₃ is less than or equal to 2.5%.

11. Product according to claim 10, in which the mass content of Al₂O₃ is less than or equal to 2.3%.

12. Product according to any one of the preceding claims, in which the mass content of Al₂O₃ is greater than or equal to 1.5%.

13. Product according to any one of the preceding claims, in which the mass content of B₂O₃ is less than or equal to 0.5%.

14. Product according to any one of the preceding claims, in which
- the mass content of Na₂O + K₂O is less than or equal to 0.10%, and
- the mass content of iron oxide and/or titanium oxide, Fe₂O₃ + TiO₂, is less than 0.4%, and
- the mass content of P₂O₅ is less than or equal to 0.05%, and
- the total mass content of the oxide species other than ZrO₂, HfO₂, SiO₂, Al₂O₃, Na₂O, K₂O, B₂O₃, CaO, SrO, Y₂O₃, P₂O5, Fe₂O₃ and TiO₂ is less than 1.0%.

15. Product according to any one of the preceding claims, in which the ratio of the mass content of silica to the content of boron oxide SiO₂ / B₂O₃ is greater than or equal to 8.
